# EUROPEAN PATENT APPLICATION

(11) **EP 3 471 121 A1**
(43) Date of publication of application: **17.04.2019**
(21) Application number: 17195821.8
(22) Date of filing: 10.10.2017
(51) Int. Cl.: H01G 11/52, H01M 2/16, H01M 4/04, H01M 10/04, H01G 11/36, H01G 11/38, H01G 11/42, H01M 4/62, G03F 7/16

(54) **METHOD FOR DRY COATING A SEPARATOR WITH ELECTRODE MATERIAL, ELECTROSTATIC DRY COATING DEVICE, AND A SEPARATOR BEING DRY COATED**

(71) Applicant: MacroCaps ApS, 1058 Copenhagen (DK)
(72) Inventor: Schaufl, Rayk-Peter, 46325 Borken (DE)
(74) Representative: Seyer, Roman

(57) **Abstract**

Method for dry coating a separator with electrode material comprising the steps of charging a separator electrostatically, and applying electrode material, preferably oppositely charged electrode material, on the electrostatically charged separator as well as an electrostatic dry coating device for dry coating a separator with electrode material and a separator being coated with electrode material.

## Description

The present invention relates to a method for dry coating a separator with electrode material, an electrostatic dry coating device for dry coating a separator with electrode material according to the method of the present invention and a separator being dry coated with electrode material obtained by the method of the present invention.

Energy storage devices such as batteries, secondary batteries and capacitors comprise an electrode assembly including at least two electrodes and a separator between them. A separator thus separates two opposite electrodes to prevent a short circuit. In the state of art, the electrode material forming a pair of electrodes is usually coated on two current collectors, which are arranged in the electrode assembly that the electrode material of each current collector is directed towards the separator and that the current collectors form the outer layers. A current collector is a conductive layer, which connects the electrode to the terminal and thus provides electrical conduction between the electrode and the terminal.

A disadvantage of the methods for producing such electrode assemblies according to the state of art is that wet solutions have to be used for coating the current collectors so that an additional drying step is required. Furthermore, it is hardly possible to coat defined areas on current collectors. A disadvantage of the electrode assembly according to the state of art is that the pair of electrodes of the two sides of the separator have an undefined and quite large distance to each other.

It is an object of the present invention therefore to provide a method for dry coating electrode material on a substrate, which electrode material have a defined and short distance to each other without the disadvantages of the known prior art.

It has been found that the above-mentioned disadvantages can be dealt with when a method for dry coating a separator with electrode material is provided comprising the steps of charging a separator electrostatically, and applying electrode material on the electrostatically charged separator. Preferably, the electrode material is oppositely charged.

In the method of the present invention, the separator provides the basis for the electrode material that is coated thereon. The separator is a non-conductive layer that is preferably as thin as possible, needs to be ion-permeable and should be chemically inert to the further components. Paper material, polymer material, woven glass fibers, woven ceramic fibers as well as non-woven materials can be used as a separator, for example. Preferably, a continuous length of these materials is used as a separator. The separator according to the present invention preferably have a thickness in the range of 5-50 µm, more preferably 10-40 µm, in particular 15-30 µm.

The electrode material that is coated on the separator may be of any material or a mixture of materials, which is conductive and has large surface area. Preferably, the electrode material is a dry powder material. The electrodes formed according to the present invention preferably have a thickness in the range of 1-100 µm, preferably 5-50 µm, more preferably 10-40 µm, in particular 15-30 µm.

Before the separator is charged, it is preferably discharged and/or cleaned. After the separator has been charged, electrode material is applied to the charged separator. Due to the electric attraction between the charged separator and the electrode material, no adhesives or solvents are necessary so that the separator is coated in a dry coating process. Preferably, the electrode material is oppositely charged in relation to the charge of the separator so that the electric attraction is increased.

Preferably, the step of electrostatically charging the separator is carried out by contacting the separator with a charged object, preferably with a charged roller, also referred to as a 'charging roller'. The separator is preferably charged electrostatically by conveying a separator over the charged roller. A charged roller is a roller having an at least partially charged surface. By contacting the separator with the charged object, the charge is at least partially transferred to the separator.

In a preferred embodiment, the charged object comprises at least one charged area and at least one uncharged area. The pattern of charged and uncharged areas on the charged object is transferred to the separator, which thus provides the same pattern of charge after being contacted with the charged object. Due to the lack of conductivity of the separator it is possible to charge defined areas of the separator only.

The charged object such as a roller preferably comprises at least one conductive and at least one non-conductive area on its surface. It is therefore possible to charge the object by applying a voltage to the at least one conductive area.

The step of applying the electrode material on the separator preferably comprises the step of bringing the electrode material into proximity of the separator or into contact with the separator. The charge on the surface of the separator attracts the electrode material so that the electrode material is transferred to the separator.

The step of bringing the electrode material into proximity of the separator or into contact with the separator is preferably carried out by a material transfer roller. A material transfer roller is a roller that transports the material into the proximity or into contact with the separator. Preferably, the material transfer roller is arranged between the separator and a loading device. The loading device loads the material transfer roller with the material that is transported to the separator. The material transfer roller is preferably charged so that the electrode material gets electrostatically charged during transport on the roller to the separator. For this purpose, the material transfer roller preferably has at least one chargeable area on its surface.

The electrode material can be of any material known to a person skilled in the art for that purpose. In a preferred embodiment of the present invention, the electrode material comprises porous carbon, graphene, carbon nanotubes, oxides of transition metals including ruthenium, iridium, iron and manganese, lithium-metal oxides, sulfides including titanium sulfide, or a mixture thereof, more preferably the electrode material comprises porous carbon, graphene, carbon nanotubes or a mixture thereof.

Preferably, the electrode material comprises a binding agent, preferably a thermoplastic polymer. In a preferred embodiment, the electrode material is present in an amount of less than 20 % per weight, preferably less than 10 % per weight, more preferably less than 5 % per weight of the electrode material. The binding agent can fix the electrode material on the separator. In a preferred embodiment, the electrode material consists of porous carbon and/or graphene and/or carbon nanotubes or a mixture thereof and/or a binding agent.

The method of the present invention preferably further comprises the step of heating the separator, preferably to a temperature in the range of 110-270 °C, more preferably 135-240°C, in particular 155 to 210°C. By heating the separator coated with the electrode material including a binding agent, the binding agent melts and fixes the electrode material.

Preferably, the step of heating the separator comprises the step of conveying the separator over a heating roller or through a pair of heating rollers.

In a further preferred embodiment, the method of the present invention additionally comprises the step of applying further conductive material, preferably further conductive material comprising metallic powder and a binding agent, on the separator after the electrode material has been applied. The outer surface of the electrode material, which is in contact with the current collector, is uneven at the microscopic level, in particular if the electrode material comprises carbon nanotubes. To obtain an even surface even at the microscopic level, further conductive material can additionally be applied on the electrode material. The further conductive material preferably comprises an aluminum powder, more preferably an aluminum powder having different particles sizes. The further conductive material can additionally comprise a binding agent. The binding agent is preferably present in an amount of less than 20 % per weight, preferably less than 10 % per weight, more preferably less than 5 % per weight of the electrode material. The binding agent is preferably a thermoplastic polymer.

In a preferred embodiment, the further conductive material has the opposite charge as the separator. In such an embodiment, the charge of the separator must not have been completely neutralized by the already applied electrode material.

The step of applying the further conductive material on the separator preferably comprises the step of bringing the further conductive material into proximity of the separator or into contact with the separator, preferably by using a material transfer roller.

In a preferred embodiment of the present invention, the method further comprises the step of removing an excess of material from the material transfer roller, preferably by using a coating thickness limiter, more preferably by using an adjustable coating thickness limiter. By removing an excess of material from the material transfer roller, it is ensured that a predetermined amount of material is transferred to the separator only, whereby electrodes of the same thickness are obtained. A coating thickness limiter according to the present invention is a kind of blade that wipes material on the surface of the material transfer roller. The thickness of the electrode on the separator is defined by the distance between the surface of the material transfer roller and the coating thickness limiter. Preferably, the gap between surface of the material transfer roller and the coating thickness limiter has a thickness in the range of 0-100 µm, preferably 5-50 µm, more preferably 10-40 µm, in particular 15-30 µm. In a preferred embodiment, the coating thickness limiter is adjustable so that the thickness of the gap can easily be adjusted.

Preferably, the steps of the method of the present invention are carried out in order indicated. Preferably, the methods of the present invention consists of the steps indicated.

To obtain a separator that is coated on both sides, the two sides of the separator are preferably coated one after the other according to the method of the present invention.

The present invention is further directed to an electrostatic dry coating device for dry coating a separator with electrode material according the method of the present invention comprising a charging roller having at least one chargeable area on its surface, a material transfer roller, preferably having at least one chargeable area on its surface, transport means for transporting a separator over said charging roller and said material transfer roller and optionally one or more components selected from the group consisting of a heating roller or a pair of heating rollers, a further material transfer roller, a coating thickness limiter per roller, a loading device, one or more storage containers for storing electrode material, binding agent or further conductive material, and a discharging device for discharging the separator before being charged by the charging roller.

The loading device is a device that loads the material transfer roller with the material. In the simplest embodiment, the loading device is a container containing the material such as the electrode material.

The electrostatic dry coating device may further comprise one or more storage containers for storing electrode material, binding agent or further conductive material. The loading device is filled with material from the storage containers.

The present invention is further directed to a separator being coated with electrode material obtained by the method according to the present invention.

Preferred embodiments of the present invention will be described with reference to the drawings as follows.
Fig. 1 illustrates a cross section of a preferred embodiment of an electrostatic dry coating device according to the present invention, which can carry out the method for dry coating a separator with electrode material according to the present invention.
Fig. 2 illustrates a cross section perpendicular to the rotation axis of the charging roller of Fig. 1.
Fig. 3 illustrates an excerpt from the electrostatic dry coating device of Fig. 1 showing the material transfer roller and the coating thickness limiter.
Fig. 4 illustrates a production process for a fan-folded multilayer of an electrode assembly comprising the separator according to the present invention.

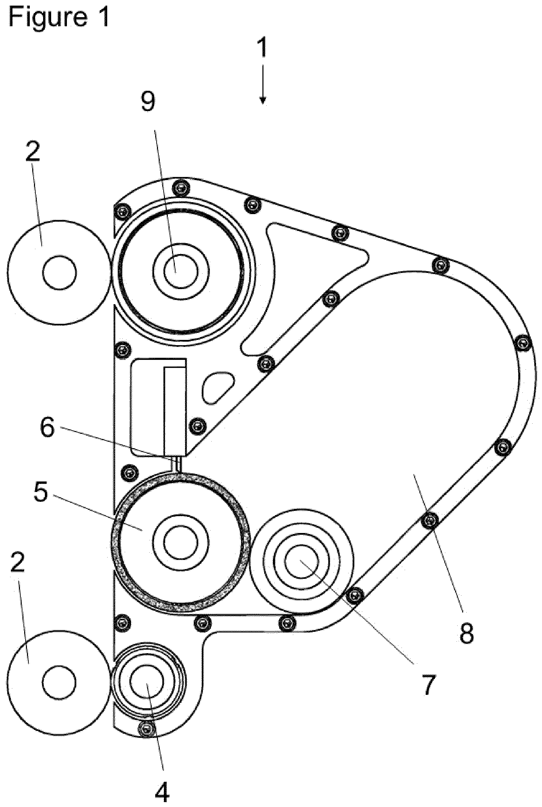

Fig. 1 illustrates a cross section of an electrostatic dry coating device according to the present invention, which can carry out the method for dry coating a separator with electrode material according to the present invention. The electrostatic dry coating device 1 comprises transport means 2 for transporting a separator (not shown) over a charging roller 4, over a first material transfer roller 5 and over a heating roller 9. The material transfer roller 5 comprises an adjustable coating thickness limiter 6 and is arranged between the separator (not shown) and a loading device 7 in form of a roller including a storage container 8 for electrode material. The separator is conveyed through the gap between the transport means 2 and the charging roller 4 vertically to the gap between the transport means 2 and the heating roller 9.

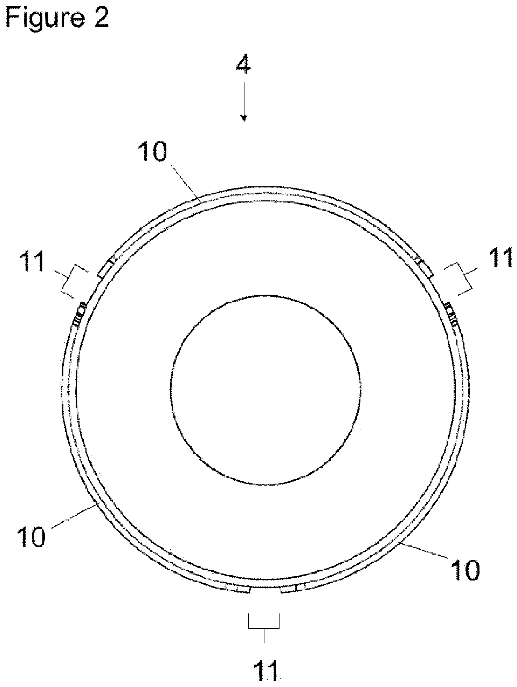

Fig. 2 illustrates a cross section perpendicular to the rotation axis of the charging roller 4 of Fig. 1. The charging roller 4 comprises conductive areas 10 and non-conductive areas 11 on its surface. The conductive areas are charged by applying voltage. This charge can be at least partially transferred to a separator that is conveyed over the charging roller 4.

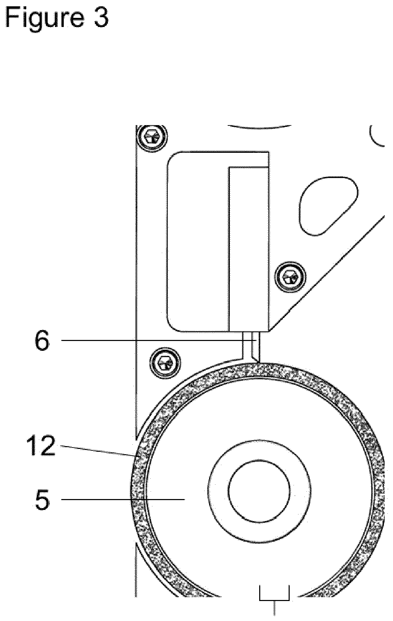

Fig. 3 illustrates an excerpt from the electrostatic dry coating device of Fig. 1 showing the material transfer roller 5 and the coating thickness limiter 6. The surface of the material transfer roller 5 is loaded with electrode material 12. The coating thickness limiter 6 removes an excess of electrode material 12 from the material transfer roller 5.

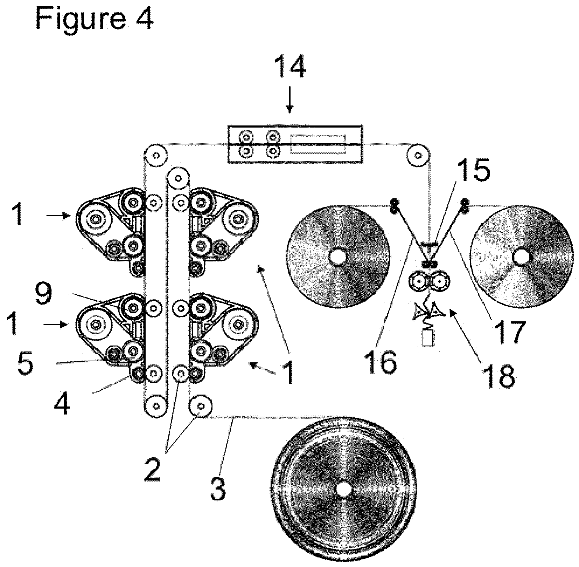

Fig. 4 illustrates a production process for a fan-folded multilayer of an electrode assembly comprising the separator according to the present invention. The two sides of the separator 3 are coated one after the other first with segments of electrode material 12 (not indicated) and then with further conductive material. The coating is carried out by electrostatic dry coating devices 1 comprising transport means 2, a charging roller 4, a material transfer roller 5 and a heating roller 9. The coated separator 3 is conveyed through a gap determination device 14, wherein the gaps between two segments of electrode material 12 are detected. After electrolytic liquid has been applied on the coated separator 3 by electrolytic liquid nozzles 15, the two current collectors 16, 17 are joined with the separator 3, which current collectors 16, 17 form the outer layer of the multilayer. The obtained multilayer is folded in a folding device 18 to obtain the fan-folded multilayer.

## Claims

1. Method for dry coating a separator with electrode material comprising the steps of
charging a separator electrostatically, and
applying electrode material, preferably oppositely charged electrode material, on the electrostatically charged separator.

2. Method according to Claim 1, wherein the step of electrostatically charging the separator is carried out by contacting the separator with a charged object, preferably with a charged roller.

3. Method according to Claim 1 or 2, wherein the charged object comprises at least one charged area and at least one uncharged area.

4. Method according to any of Claims 1 to 3, wherein the step of applying electrode material on the separator comprises the step of bringing the electrode material into proximity of the separator or into contact with the separator.

5. Method according to Claim 4, wherein the step of bringing the electrode material into proximity of the separator or into contact with the separator is carried out by a material transfer roller.

6. Method according to any of Claims 1 to 5, wherein the electrode material comprises porous carbon, graphene, carbon nanotubes or a mixture thereof.

7. Method according to any of Claims 1 to 6, wherein the electrode material comprises a binding agent, preferably a thermoplastic polymer.

8. Method according to any of Claims 1 to 7, further comprising the step of heating the separator, preferably to a temperature in the range of 110-270 °C, more preferably 135-240°C, in particular 155 to 210°C.

9. Method according to Claim 8, wherein the step of heating the separator comprises the step of conveying the separator over a heating roller or through a pair of heating rollers.

10. Method according to any of Claims 1 to 9, additionally comprising the step of applying further conductive material, preferably further conductive material comprising metallic powder and a binding agent, on the separator after the electrode material has been applied.

11. Method according to Claim 10, wherein the further conductive material has the opposite charge as the charged separator.

12. Method according to Claims 10 or 11, wherein the step of applying the further conductive material on the separator comprises the step of bringing the further conductive material into proximity of the separator or into contact with the separator, preferably by using a material transfer roller.

13. Method according to any of Claims 1 to 12, further comprising the step of removing an excess of material from the material transfer roller, preferably by using a coating thickness limiter per roller, more preferably by using an adjustable coating thickness limiter per roller.

14. Electrostatic dry coating device for dry coating a separator with electrode material according the methods of Claims 1 to 13 comprising
a charging roller having at least one chargeable area on its surface,
a material transfer roller, preferably having at least one chargeable area on its surface,
transport means for transporting a separator over said charging roller and said material transfer roller and optionally one or more components selected from the group consisting of
a heating roller or a pair of heating rollers,
a further material transfer roller,
a coating thickness limiter per roller,
a loading device,
one or more storage containers for storing electrode material, binding agent or further conductive material, and
a discharging device for discharging the separator before being charged by the charging roller.

15. Separator being coated with electrode material obtained by the method according to any of Claims 1-13.
